# EUROPEAN PATENT SPECIFICATION

(11) **EP 3 886 491 B1**
(45) Date of publication and mention of the grant of the patent: **02.10.2024**
(21) Application number: 19887931.4
(22) Date of filing: 21.11.2019
(51) Int. Cl.: H04W 28/08

(54) **METHODS FOR REALIZING LOAD BALANCING, CENTRALIZED CONTROL NODE AND BASE STATION**
VERFAHREN ZUR REALISIERUNG EINES LASTAUSGLEICHS, ZENTRALISIERTER STEUERKNOTEN UND BASISSTATION
PROCÉDÉS DE RÉALISATION D'UN ÉQUILIBRAGE DE CHARGE, NOEUD DE COMMANDE CENTRALISÉ ET STATION DE BASE

(30) Priority: 23.11.2018 CN 201811408446
(43) Date of publication of application: 29.09.2021
(73) Proprietor: ZTE Corporation, Shenzhen Guangdong 518057 (CN)
(72) Inventor: LI, Jinglan, Shenzhen, Guangdong 518057 (CN); GAO, Chao, Shenzhen, Guangdong 518057 (CN)
(74) Representative: Carangelo, Pierluigi
(86) International application number: PCT/CN2019/119859
(87) International publication number: WO 2020/103890

(56) References cited:
- CN-A- 103 079 235
- CN-A- 103 079 235
- CN-A- 103 220 717
- CN-A- 105 873 132
- CN-A- 105 873 132
- CN-A- 105 873 132
- CN-A- 106 162 749
- CN-A- 106 162 749
- US-A1- 2014 099 954
- US-A1- 2014 198 659
- US-A1- 2015 078 168

## Description

### Technical Field

The present application relates to the field of communications, for example, to methods for realizing load balancing, a Centralized Control Node (CCNode) and base station.

### Background

In many occasions (for example, stadiums and concerts), there is a situation where many users request the communication service centrally. In this situation, there will be a surge of traffic, and even a steep rise and fall of load in a very short time. Therefore, a method capable of realizing load balancing is needed.

In the related art, when load balancing is realized, the load will be balanced from multiple cells to the same target cell, which will lead to overloading of the target cell, so the effect of load balancing is not ideal.

US2014198659A1 discloses cell range expansion elasticity control, CN105873132A discloses a kind of method and apparatus carrying out load balancing, CN106162749A discloses a kind of load balancing method and equipment, CN103079235A discloses a method and device for realizing load balancing in an LTE system, and US 2014/099954 discloses a method and apparatus for balancing cell load in wireless communication system. However, the problem still remains not properly solved.

### Summary

Embodiments of the present application provide methods for realizing load balancing, a CCNode and a base station, which may solve the problem in the related art that the effect of load balancing is not ideal.

The present application is set out in the appended set of claims.

### Brief Description of the Drawings

Fig. 1 is an architecture diagram of a system for realizing load balancing according to some embodiments of the present application.
Fig. 2 is a schematic diagram of establishing a connection between an eNB and a CCNode according to some embodiments of the present application.
Fig. 3 is a schematic diagram of initiating a configuration update by an eNB according to some embodiments of the present application.
Fig. 4 is a schematic diagram of initiating a configuration update by a CCNode according to some embodiments of the present application.
Fig. 5 is a flowchart of a method for realizing load balancing according to some embodiments of the present application.
Fig. 6 is a flowchart of another method for realizing load balancing according to some embodiments of the present application.
Fig. 7 is a schematic diagram of yet another method for realizing load balancing according to some embodiments of the present application.
Fig. 8 is a schematic diagram of an exemplary cell scenario.
Fig. 9 is a structural block diagram of a CCNode according to some embodiments of the present application.
Fig. 10 is a structural block diagram of a base station according to some embodiments of the present application.
Fig. 11 is a schematic diagram of another CCNode according to some embodiments of the present application.
Fig. 12 is a schematic diagram of another base station according to some embodiments of the present application.

### Detailed Description

The technical solutions in the embodiments of the present application are described below in combination with the embodiments of the present application and the corresponding accompanying drawings. The described embodiments are only a part of the embodiments of the present application but not all.

The method for realizing load balancing according to the embodiments of the present application may involve multiple base stations and a CCNode. The base stations may be in many different types and/or forms, for example, an Evolved Node B (eNB). The CCNode may be a node for centralized control of load. The CCNode may be connected to multiple base stations through, for example, Xt interfaces.

In the embodiments of the present application, one CCNode may be set in an area with a high number of UEs (for example, a gymnasium). The CCNodes set in different areas may not affect each other, and multiple CCNodes may be managed by the same operation and maintenance management node. The CCNode may interact with multiple base stations in the area to complete load balancing among cells of multiple base stations.

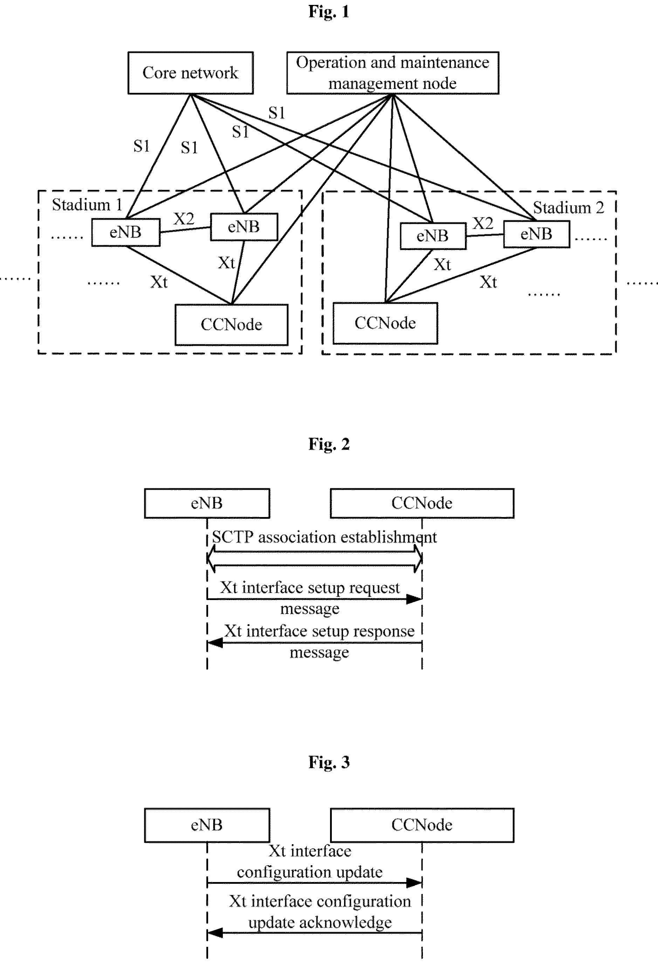

Fig. 1 is an architecture diagram of a system for realizing load balancing according to some embodiments of the present application. Referring to Fig. 1, the system for realizing load balancing according to some embodiments of the present application may be designed to include multiple eNBs and at least one CCNode. The multiple eNBs may be connected through an X2 interface. The multiple eNBs may be connected to a core network through S1 interfaces. The CCNode may be connected to multiple eNBs through Xt interfaces. At the same time, the CCNode may also be connected to the operation and maintenance management node.

In the system architecture shown in Fig. 1, after obtaining cell information, each eNB may directly send the cell information to the CCNode through the Xt interface, so that the CCNode may determine, based on the cell information, a cell to be balanced that needs load balancing.

In the embodiments of the present application, the functions of the CCNode may include: completing the processing of load-related data reported by all cells in multiple eNBs within the scope of responsibility; and after a rapid load balancing decision is completed, sending the load balancing decision to the eNB, which executes tasks corresponding to the load balancing decision, through the Xt interface. The CCNode may be managed by the operation and maintenance management node.

In the embodiments of the present application, the functions of the eNB may include: in coordination with a centralized control strategy, taking charge of reporting information that the eNB needs to report in rapid load balancing, including load information of multiple cells; and taking charge of reporting the configuration of all neighboring cells of a cell, and reporting the cell migration-out success rate recorded by the cell in real time and the number of online UEs at a specific frequency point in the cell.

In the embodiments of the present application, the Xt interface completes the reporting of load and cell related configuration information between the eNBs and controls the sending of message.

Fig. 2 is a schematic diagram of establishing a connection between an eNB and a CCNode according to some embodiments of the present application. The eNB establishes a communication connection with the CCNode before communicating with the CCNode. As shown in Fig. 2, the process that the eNB establishes the communication connection with the CCNode may include the following operations. First, when the eNB and the CCNode are respectively configured with Stream Control Transmission Protocol (SCTP) coupling to each other, the SCTP coupling is established between the eNB and the CCNode. Second, after the SCTP coupling between the eNB and the CCNode is established, the eNB may send an Xt setup request message (Xt SETUP REQUEST) to the CCNode to request an establishment of Xt connection, and the message may carry the information needed for multiple functions on the CCNodes, such as information about the cell and the neighboring cell. Third, after receiving the Xt setup request message, the CCNode replies to the eNB with an Xt setup response message (Xt SETUP RESPONSE) if the CCNode determines that the Xt connection with the eNB is allowed to be established, and the message may carry strategy information about whether multiple functions on the CCNode are enabled. After the above process, the Xt connection may be successfully established between the eNB and the CCNode.

After the Xt connection is successfully established between the eNB and the CCNode, if the information carried in the Xt setup request message is changed, the changed information is sent to the CCNode.

Fig. 3 is a schematic diagram of initiating a configuration update by an eNB according to some embodiments of the present application. As shown in Fig. 3, when the eNB finds that the information in the Xt setup request message is changed, the eNB may send an Xt configuration update message (Xt CONFIGURATION UPDATE) to the CCNode to request an update to the configuration of the eNB. The message carries the updated information. After receiving the Xt configuration update message, the CCNode may reply to the eNB with an Xt configuration update acknowledge message (Xt CONFIGURATION UPDATE ACKNOWLEDGE) if the CCNode determines that the configuration update of the eNB can be accepted. After the above process, eNB Xt configuration between the eNB and the CCNode is updated successfully.

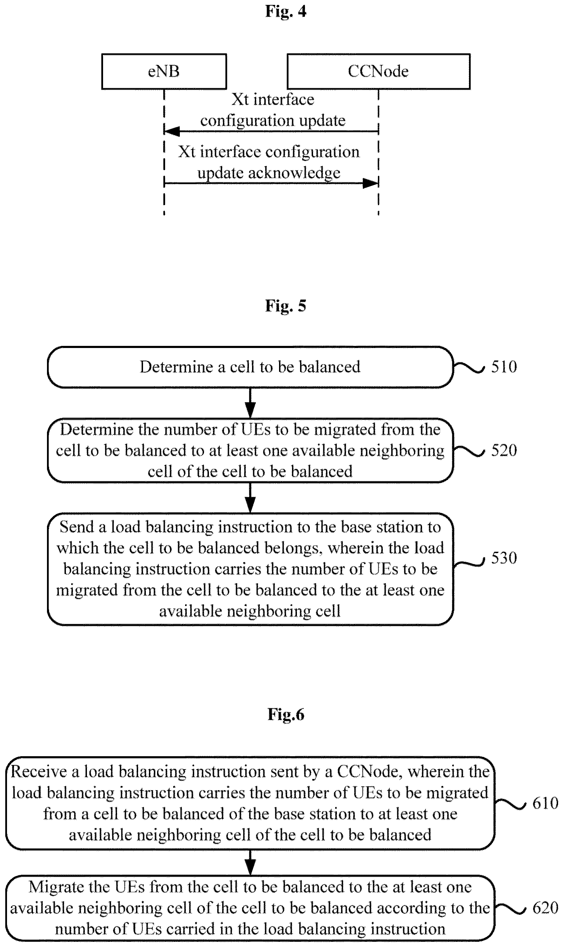

In the embodiments of the present application, the configuration update may also be initiated by the CCNode. Fig. 4 is a schematic diagram of initiating a configuration update by a CCNode according to some embodiments of the present application. As shown in Fig. 4, when finding that the information in the Xt setup response message is changed, the CCNode may send the Xt configuration update message (Xt CONFIGURATION UPDATE) to the eNB to request an update to the configuration of the CCNode. The message carries the updated information. After receiving the Xt configuration update message, the eNB replies to the CCNode with the Xt configuration update acknowledge message (Xt CONFIGURATION UPDATE ACKNOWLEDGE) if the eNB determines that the configuration update can be accepted. After the above process, TR Xt configuration between the CCNode and the eNB is updated successfully.

After the connection between the eNB and the CCNode is established, the load balancing may be realized through the interaction between the eNB and the CCNode.

Fig. 5 is a flowchart of a method for realizing load balancing according to some embodiments of the present application. The method for realizing load balancing shown in Fig. 5 may be performed by a CCNode. As shown in Fig. 5, the method for realizing load balancing according to the embodiments of the present application may include operation 510 to operation 530.

At operation 510, a cell to be balanced is determined.

In some exemplary implementations of the embodiments of the present application, the operation that the cell to be balanced is determined in operation 510 may include that: cell information sent by the multiple base stations is obtained; the loads of multiple cells belonging to the multiple base stations are obtained; and the cell to be balanced is determined based on the loads of the multiple cells and the cell information.

The cell information sent by the base station may cover a variety of different information, for example, including at least one of the following information: a frequency point at which the cell operates, the eNB to which the cell belongs, a neighboring cell of the cell, an identity of the cell, a degree of overlapping between the cell and the neighboring cell, the number of online UEs in the cell, the number of UEs supporting inter-frequency frequency points in the online UEs in the cell, etc.

In the embodiments of the present application, the loads of multiple cells may be calculated by the base station, and the base station sends the calculated loads of multiple cells to the CCNode. The base station may also send the cell information related to calculating the load of the cell to the CCNode, and the CCNode calculates the loads of multiple cells.

In some exemplary implementations of the embodiments of the present application, a way of determining the cell to be balanced based on the loads of multiple cells and the cell information may be that: at least one target cell, whose load is not less than a threshold value, is determined from the multiple cells belonging to the multiple base stations based on the loads of the multiple cells; at least one neighboring cell of the at least one target cell is determined based on the cell information; and a target cell, whose neighboring cell has a load less than the threshold value, is selected from the at least one target cell as the cell to be balanced. Only the target cell meeting the conditions can be used as the cell to be balanced, which avoids taking the target cell, which does not have the neighboring cell with a low load, as a cell to be carried (also called the cell to be balanced), thereby achieving a better effect of load balancing, and improving the feasibility of cell switching.

In some embodiments of the present application, after the neighboring cell of the target cell is determined, the method according to the embodiments of the present application may further include the following operation. A degree of overlapping between each target cell and each neighboring cell of the target cell is obtained. In some embodiments, the operation that the target cell, whose neighboring cell has the load less than the threshold value, is selected from the at least one target cell as the cell to be balanced may include that: the target cell, whose neighboring cell satisfies the following conditions, is selected from the at least one target cell as the cell to be balanced: the load of the neighboring cell is less than the threshold value, and the degree of overlapping between the neighboring cell and the target cell is greater than a first preset threshold. In the exemplary implementations, only the target cell meeting the two conditions is used as the cell to be balanced, which avoids taking the target cell, which has the neighboring cell with a low load but the neighboring does not overlap with the target cell, as the cell to be carried, thereby achieving a better effect of load balancing, and improving the efficiency of cell switching.

In the embodiments of the present application, the threshold value may be set according to needs, for example, the threshold value may be set to 0.7 or 70%, etc.

At operation 520, the number of UEs to be migrated from the cell to be balanced to at least one available neighboring cell of the cell to be balanced is determined.

In some embodiments of the present application, after the cell to be balanced is determined, the method according to the embodiments of the present application may further include the following operation. A total number of UEs to be migrated out of the cell to be balanced is determined based on a load of the cell to be balanced. In some embodiments, the operation that the number of UEs to be migrated from the cell to be balanced to the at least one available neighboring cell of the cell to be balanced is determined in operation 520 may include that: the number of UEs to be migrated from the cell to be balanced to each available neighboring cell of the cell to be balanced is determined based on the total number of the UEs to be migrated out of the cell to be balanced.

In the embodiments of the present application, a corresponding relationship between the load of the cell and the number of UEs to be migrated out may be set in advance. Correspondingly, a possible implementation of determining the total number of the UEs to be migrated out of the cell to be balanced based on the load of the cell to be balanced may be that: the total number of the UEs to be migrated out of the cell to be balanced is determined based on the load of the cell to be balanced and the preset corresponding relationship between a load of a cell and the number of UEs to be migrated out.

At operation 530, a load balancing instruction is sent to the base station to which the cell to be balanced belongs, wherein the load balancing instruction carries the number of UEs to be migrated from the cell to be balanced to the at least one available neighboring cell.

After receiving the load balancing instruction, the base station to which the cell to be balanced belongs may start a cell migration process.

In some exemplary implementations of the embodiments of the present application, after the load balancing instruction is sent to the base station to which the cell to be balanced belongs in operation 530, the method according to the embodiments of the present application may further include the following operations. A success rate of migration to a specific available neighboring cell of the cell to be balanced is obtained. In a case where there is a need to migrate to the specific available neighboring cell again, the number of UEs planned to be migrated to the specific available neighboring cell is determined based on the success rate. In this way, it may be guaranteed that the determined number of UEs planned to be migrated to the specific available neighboring cell is more accurate.

In some exemplary implementations of the embodiments of the present application, the operation that the number of UEs planned to be migrated to the specific available neighboring cell is determined based on the success rate may include that: modified bearing capacity of the specific available neighboring cell is obtained, wherein the modified bearing capacity is a product of a residual bearing capacity of the specific available neighboring cell and the success rate; and the number of UEs planned to be migrated to the specific available neighboring cell is determined based on the total number of the UEs to be migrated out of the cell to be balanced and a ratio of the modified bearing capacity of the specific available neighboring cell to a total modified bearing capacity. The total modified bearing capacity is a sum of the modified bearing capacity of the specific available neighboring cell and residual bearing capacity of all the available neighboring cells, except the specific available neighboring cell, of the cell to be balanced. In this way, it may be guaranteed that the determined number of UEs planned to be migrated to the specific available neighboring cell is more accurate.

In the embodiments of the present application, the CCNode is connected to multiple base stations, the cell to be balanced and the number of UEs to be migrated from the cell to be balanced to the at least one available neighboring cell of the cell to be balanced are determined by the CCNode, and after the cell to be balanced and the number of UEs to be migrated are obtained, the load balancing instruction may be directly sent to the cell to be balanced. In this way, by carrying out the overall planning of loads through the CCNode, the relative balance of the loads of multiple cells may be ensured, and a good effect of load balancing may be achieved.

In some exemplary implementations of the embodiments of the present application, after the cell to be balanced is determined, the method according to the embodiments of the present application may further include the following operations. The loads of multiple neighboring cells of the cell to be balanced are obtained. At least one neighboring cell, whose load is less than a set threshold value, is selected from multiple neighboring cells of the cell to be balanced as the at least one available neighboring cell of the cell to be balanced. In this way, the valid available neighboring cell may be quickly selected.

In the embodiments of the present application, the degree of overlapping may also be considered in the process of selecting the available neighboring cell. In some exemplary implementations of the embodiments of the present application, after the cell to be balanced is determined, the method according to the embodiments of the present application may further include the following operation. A degree of overlapping between the cell to be balanced and multiple neighboring cells of the cell to be balanced is obtained. In some embodiments, the operation that the at least one neighboring cell, whose load is less than the set threshold value, is selected from multiple neighboring cells of the cell to be balanced as the at least one available neighboring cell of the cell to be balanced may include that: the at least one neighboring cell, whose load is less than the set threshold value and the degree of overlapping between which and the cell to be balanced is greater than a second preset threshold, is selected from the multiple neighboring cells of the cell to be balanced as the at least one available neighboring cell of the cell to be balanced. In this way, the valid available neighboring cell may be quickly selected, and it may be ensured that the selected available neighboring cell has a better effect of load balancing and higher efficiency of cell switching.

In some exemplary implementations of the embodiments of the present application, when the cell to be balanced is determined and the available neighboring cell of the cell to be balanced is obtained, the method according to the embodiments of the present application further includes the following operation. Residual bearing capacity of the at least one available neighboring cell is determined based on the load of the at least one available neighboring cell of the cell to be balanced. In some embodiments, the operation that the number of UEs to be migrated from the cell to be balanced to each available neighboring cell of the cell to be balanced is determined based on the total number of the UEs to be migrated out of the cell to be balanced includes that: for any available neighboring cell of the cell to be balanced, the number of UEs planned to be migrated to the at least one available neighboring cell is determined based on the total number of the UEs to be migrated out of the cell to be balanced and a ratio of the residual bearing capacity of the available neighboring cell to a total residual bearing capacity of the at least one available neighboring cells of the cell to be balanced.

The above way may be applied to an intra-frequency case. In this case, the number of UEs planned to be migrated to the at least one available neighboring cell may be the number of UEs to be migrated from the cell to be balanced to the at least one available neighboring cell of the cell to be balanced which is determined in operation 520.

The method according to the embodiments of the present application may process an inter-frequency case. In some embodiments of the present application, after the cell to be balanced is determined, the method according to the embodiments of the present application further includes the following operations. It is determined whether there is an inter-frequency neighboring cell in the at least one available neighbor cell of the cell to be balanced. In a case where there is an inter-frequency neighboring cell in the at least one available neighbor cell of the cell to be balanced, the following operations are performed: the number of UEs supporting inter-frequency frequency points in the cell to be balanced is obtained; the number of UEs planned to be migrated to the inter-frequency neighboring cell is obtained. A smaller value of the number of UEs supporting the inter-frequency frequency points in the cell to be balanced and the number of UEs planned to be migrated to the inter-frequency neighboring cell is taken as the number of UEs to be migrated from the cell to be balanced to the inter-frequency neighboring cell.

In the embodiments of the present application, after receiving the relevant information of multiple cells reported by the eNB, the CCNode may complete the following operations according to a fast algorithm.
1. The cell to be balanced is selected from all reported cells, and the selection conditions are as follows: 1) the load of the cell is greater than or equal to the preset threshold; and 2) the cell has a preset number of neighboring cells with low load (that is, there are neighboring cells whose load is lower than the preset value).
2. The cells needing to be balanced the most are determined in turn.
   Generally, the cells needing to be balanced are sorted by load, and the one with the highest load is the cell needing to be balanced the most.
3. For each cell needing to be balanced, the corresponding number of UEs to be migrated from the cell needing to be balanced to each neighboring cell meeting the conditions can be determined as follows.
   1) Levels, for example, low, medium, high, or 1, 2, 3, 4, are set according to the load and the preset threshold, and each level corresponds to the preset number of UEs migrated out.
   2) All or a preset number of neighboring cells whose residual capacity is greater than a preset value are selected, and the number of UEs needing to be migrated corresponding to the level of the present cell is allocated according to the ratio of the residual capacity of each neighboring cell to the total residual capacity of these selected neighboring cells.
   3) In the current invention, in a case where there is an inter-frequency neighboring cell of the cell, the UEs may be migrated to the inter-frequency neighboring cell. Therefore, the number of UEs to be migrated which is allocated in the above operation is adjusted in combination with the number of all the UEs supporting the inter-frequency frequency points reported by the cell.
4. The number of UEs to be migrated out is modified interactively in real time.

The above operation that the number of UEs to be migrated out is modified interactively in real time may include the following two situations.
1) The eNB reports in real time or periodically neighboring cell information (intra-frequency or inter-frequency) of multiple cells, and report the number of UEs supporting inter-frequency neighboring cell frequency points in the online UEs in multiple cells.
   After obtaining the above information, the CCNode performs the following operations.
   A. The number of UEs supporting the inter-frequency neighboring cell frequency points in the online UEs in the cell is allocated according to the ratio of the residual capacity of each inter-frequency neighboring cell of the cell to the integrated residual capacity of all inter-frequency neighboring cells of the cell, and the number of UEs supported to be migrated from the cell to be balanced to multiple inter-frequency neighboring cells is obtained.
   B. The pre-decided number of UEs migrated from the cell to a specific inter-frequency neighboring cell is compared with the number of UEs supported to be migrated to the inter-frequency neighboring cell which is calculated in operation A, and a smaller value of the two numbers is taken.
2) The eNB reports in real time or periodically the switching success rate of migrating UEs from each of multiple cells to multiple neighboring cells of the cell.

The CCNode will modify the number of UEs decided to be migrated to the neighboring cell next time according to the actual success rate of switching between each cell and the neighboring cell.

For example, the residual capacity of the neighboring cell is modified by taking the success rate of switching between the cell and the specific neighboring cell as a coefficient. In this way, if the success rate is low, the residual capacity becomes low after modification, and the pre-decided number of UEs allocated becomes less in the subsequent allocation, which facilitates the next more accurate allocation of UEs migrated out.

Fig. 6 is a flowchart of a method for realizing load balancing according to some embodiments of the present application. The method for realizing load balancing shown in Fig. 6 may be performed by a base station. As shown in Fig. 6, the method according to the embodiments of the present application may include operation 610 to operation 620.

At S610, a load balancing instruction sent by a CCNode is received, wherein the load balancing instruction carries the number of UEs to be migrated from a cell to be balanced of the base station to at least one available neighboring cell of the cell to be balanced.

At S620, the UEs are migrated from the cell to be balanced to the at least one available neighboring cell of the cell to be balanced according to the number of UEs carried in the load balancing instruction.

In the embodiments of the present application, the CCNode is connected to multiple base stations, the cell to be balanced and the number of UEs to be migrated from the cell to be balanced to the at least one available neighboring cell of the cell to be balanced are determined by the CCNode, and after the cell to be balanced and the number of UEs to be migrated are obtained, the load balancing instruction may be directly sent to the cell to be balanced. By carrying out the overall planning of loads through the CCNode, the relative balance of the loads of multiple cells may be ensured, and a good effect of load balancing may be achieved.

In some exemplary implementations of the embodiments of the present application, before the load balancing instruction sent by the CCNode is received, the method further includes the following operation. Cell information is sent to the CCNode. The contents reported to the CCNode by the base station may include at least one of the following: load information of all cells, neighboring cell configuration (e.g. intra-frequency or inter-frequency, and coverage ratio) of all the cells, the number of UEs supporting the inter-frequency neighboring cell frequency points in the online UEs of all the cells, and the success rate of switching between all the cells and multiple neighboring cells of the cells corresponding to the level of the cell.

By sending the cell information to the CCNode, the base station can help the CCNode to determine the cell to be balanced.

In some exemplary implementations of the embodiments of the present application, after the UEs are migrated from the cell to be balanced to the at least one available neighboring cell of the cell to be balanced, the method further includes the following operation. An execution result of migration of the UEs is sent to the CCNode. The execution result may include, for example, the success rate of switching corresponding to the level of the cell. In this way, the CCNode may adjust subsequent operations timely according to the execution result.

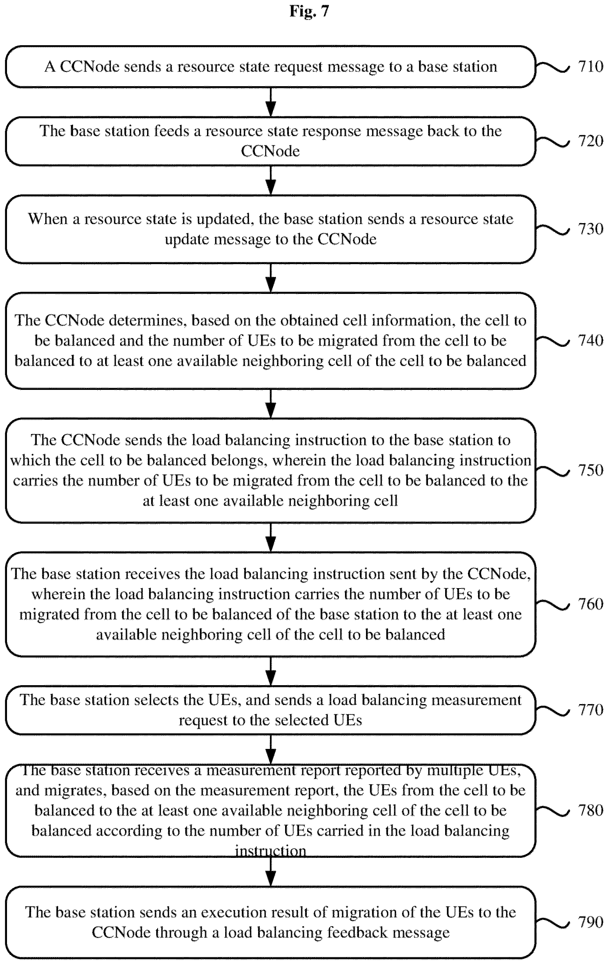

Fig. 7 is a flowchart of yet another method for realizing load balancing according to some embodiments of the present application. As shown in Fig. 7, the method according to the embodiments of the present application may include operation 710 to operation 790.

At operation 710, a CCNode sends a resource state request message to a base station.

In the embodiments of the present application, the resource state request message may be used for requesting multiple eNBs to report the cell information, for example, cell load information.

At operation 720, the base station feeds a resource state response message back to the CCNode.

In the embodiments of the present application, the eNB collects the load information of multiple cells and periodically reports the load information to the CCNode through an Xt resource state response message according to the period indicated in an Xt resource state request message.

At operation 730, when a resource state is updated, the base station sends a resource state update message to the CCNode.

At operation 740, the CCNode determines, based on the obtained cell information, a cell to be balanced and the number of UEs to be migrated from the cell to be balanced to at least one available neighboring cell of the cell to be balanced.

At operation 750, the CCNode sends a load balancing instruction to the base station to which the cell to be balanced belongs, wherein the load balancing instruction carries the number of UEs to be migrated from the cell to be balanced to the at least one available neighboring cell.

At operation 760, the base station receives the load balancing instruction sent by the CCNode, wherein the load balancing instruction carries the number of UEs to be migrated from the cell to be balanced of the base station to the at least one available neighboring cell of the cell to be balanced.

At operation 770, the base station selects the UEs, and sends a load balancing measurement request to the selected UEs.

In the embodiments of the present application, the base station may select the UEs according to the load balancing instruction of the CCNode, and sends load balancing measurement to selected UE1 to UEm (where m is an integer greater than 1).

At operation 780, the base station receives a measurement report reported by multiple UEs, and migrates, based on the measurement report, the UEs from the cell to be balanced to the at least one available neighboring cell of the cell to be balanced according to the number of UEs carried in the load balancing instruction.

At operation 790, the base station sends an execution result of migration of the UEs to the CCNode through a load balancing feedback message.

The CCNode may calculate a success rate of migration to the specific available neighboring cell of the cell to be balanced according to the execution result fed back by the base station, and the success rate may be used for the next load balancing decision. For example, when it is needed to migrate to the specific available neighboring cell again, the number of UEs planned to be migrated to the specific available neighboring cell may be determined based on the success rate.

In the embodiments of the present application, the CCNode is connected to multiple base stations, the cell to be balanced and the number of UEs to be migrated from the cell to be balanced to the at least one available neighboring cell of the cell to be balanced are determined by the CCNode, and after the cell to be balanced and the number of UEs to be migrated are obtained, the load balancing instruction may be directly sent to the cell to be balanced. In this way, by carrying out the overall planning of loads through the CCNode, the relative balance of the loads of multiple cells may be ensured, and a good effect of load balancing may be achieved.
1) After the UEs are migrated out, the loads of multiple cells can reach balance at one time, and there will not be a situation in which the load of a certain neighboring cell is too high and the load of a certain neighboring cell is still too low under a distributed architecture; 2) a balancing algorithm is fully combined with the success rate of switching to automatically adjust, which avoids the interference of the cell to the cell with poor user perception; 3) the balancing algorithm takes full account of the situation of the frequency point in the neighboring cell and may ensure that the UE switching measurement reaches the target cell successfully in a short time as much as possible; 4) not only information interaction can be quickly performed and the speed can be balanced quickly, but the common problem of ping-pong switching in load balancing can be prevented; 5) in the centralized mode, the frequency of information interaction between the CCNode and the eNB may reach 1-2 seconds, which is more timely than distributed interaction; in addition, the centralized mode may comprehensively obtain the cell information within its administrative area and take the overall consideration.

The method for realizing load balancing according to the embodiments of the present application may avoid the following problems: 1) repetition and low efficiency, increased burden of the base station, and low response speed; 2) the effect is uncontrollable.

For the first problem of low response speed, a Long Term Evolution (LTE) base station typically has 32 X2 connections with the surrounding base stations. Therefore, in theory, each base station periodically informs 32 base stations of the load of all their cells, and also periodically obtains the load of all the cells of the 32 base stations. Here, the period cannot be set too long, because if the period is too long, the balancing effect will be affected. If the period is set too short, the running burden of the base station will be greatly increased.

For the second problem that the effect is uncontrollable, each serving cell can only see the situation of its neighboring cell, so a situation that multiple cells balance to the same target cell may occur, which leads to the situation that the target cell may be overloaded, and the original purpose of load balancing cannot be achieved.

An example is given below.

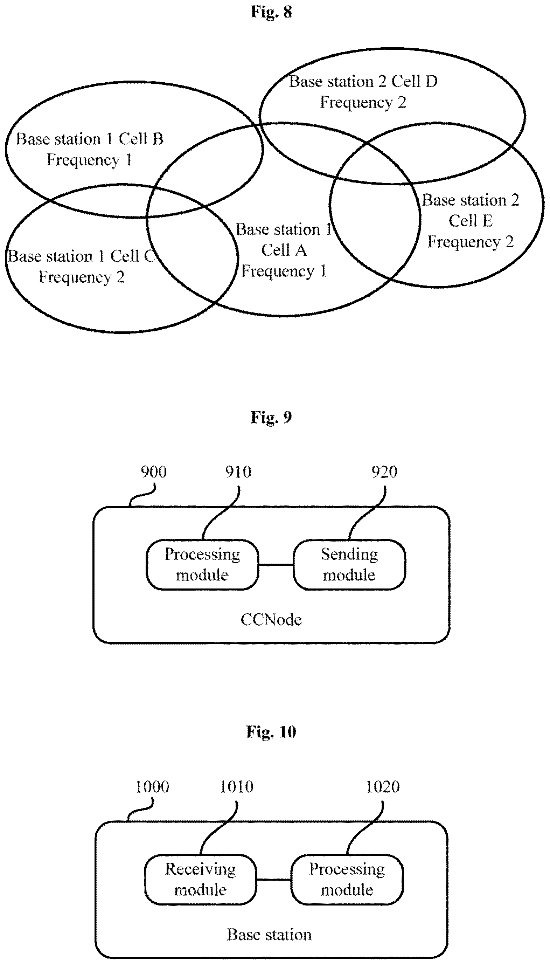

In this example, the following assumptions are made: the cell A belongs to the base station 1 (eNB1), the frequency point is the frequency 1, and the neighboring cells are the cells B, C, D, and E; the cell B belongs to the eNB1, the frequency point is the frequency 1, and the neighboring cells are the cells A and C; the cell C belongs to the eNB1, the frequency point is the frequency 2, and the neighboring cells are the cells A and B; the cell D belongs to the base station 2 (eNB2), the frequency point is the frequency 2, and the neighboring cells are the cells A and E; the cell E belongs to the eNB2, the frequency point is the frequency 2, and the neighboring cells are the cells A and D, as shown in Fig. 8.

### Pre-configuration for use

The CCNode informs the eNB1 and the eNB2 to report the load information by reporting the ratio of the number of UEs.

The CCNode receives the cell configuration information reported by the eNB1 and the eNB2, for example, including the following contents:
the cell A belongs to the eNB 1, the frequency point is the frequency 1, and the neighboring cells are the cells B, C, D, and E;
the cell B belongs to the eNB1, the frequency point is the frequency 1, and the neighboring cells are the cells A and C;
the cell C belongs to the eNB1, the frequency point is the frequency 2, and the neighboring cells are the cells A and B;
the cell D belongs to the eNB2, the frequency point is the frequency 2, and the neighboring cells are the cells A and E;
the cell E belongs to the eNB2, the frequency point is the frequency 2, and the neighboring cells are the cells A and D.

The CCNode may also receive information about the degree of overlapping between the neighboring cells reported by the eNB1 and the eNB2, as shown in the table below.

| | A | B | C | D | E |
|---|---|---|---|---|---|
| A | / | 15% | 85% | 80% | 82% |
| B | 15% | / | 81% | / | 0 |
| C | 85% | 81% | / | 0 | 0 |
| D | 20% | / | 0 | / | 20% |
| E | 82% | 0 | 0 | 20% | / |

The CCNode receives the number of UEs supporting the inter-frequency frequency points in the online UEs of all the cells, which is reported by the eNB1 and the eNB2, as shown in the table below.

| | A (frequency 1) | B (frequency 1) | C (frequency 2) | D (frequency 2 | E (frequency 2) |
|---|---|---|---|---|---|
| Frequency 1 | / | / | 10 | 12 | 16 |
| Frequency 2 | 20 | 15 | / | / | / |

The CCNode receives the loads of the cells A, B, C, D, and E periodically reported by the eNB1 and the eNB2.

In a reporting period, the CCNode learns by calculating that the loads of the cells A, B, C, D, and E are respectively 0.82, 0.6, 0.3, 0.7 and 0.4.

The CCNode selects the cells to be balanced, filters out the cells A and D according to the preset threshold 0.7, checks that neighboring cells B, C and E of the cell A are the neighboring cells with low load (less than 0.7), and checks that neighboring cell E of the cell D is the neighboring cell with low load (less than 0.7). It can be seen that the cell A and the cell D meet the conditions of the cell to be balanced, that is, the cell itself is a cell with high load, and has at least one neighboring cell with low load.

The number of UEs to be migrated from the cell to be balanced is determined. The number of UEs planned to be migrated may be obtained according to a corresponding relationship between the preset level and the number of UEs to be migrated out. The corresponding relationship is as follows: level 1 is 0.9-1.0, and the number of UEs to be migrated out is 60; level 2 is 0.8-0.9, and the number of UEs to be migrated out is 40; and level 3 is 0.7-0.8, and the number of UEs to be migrated out is 20. It can be seen from above that the cell A is 0.82 which is at the level 2, so the number of UEs to be migrated out is 40. The cell D is 0.7 which is at the level 3, so the number of UEs to be migrated out is 20.

The neighboring cell with the degree of overlapping higher than the preset threshold is selected (assuming that the preset threshold is 20%). The neighboring cells of the cell A is B, C, D, and E, after filtering based on the degree of overlapping, the available neighboring cells generated are C, D and E. The neighboring cells of the cell D is A and E, after filtering based on the degree of overlapping, there is no available neighboring cell generated. Therefore, the cell D does not meet the migration conditions, and only the cell A meets the migration conditions.

The CCNode calculates the number of UEs to be migrated to each available neighboring cell. The calculation process may be as follows.

The neighboring cells with low load of the cell A are B, C and E, and the residual capacities are respectively 0.4, 0.7 and 0.6.

Therefore, the ratio of the residual capacity of the cell C to the total residual capacity is equal to 0.7/(0.7+0.4+0.6), namely 0.4118, the ratio of the residual capacity of the cell B to the total residual capacity is equal to 0.4/(0.7+0.4+0.6), namely 0.2353, and the ratio of the residual capacity of the cell E to the total residual capacity is equal to 0.6/(0.7+0.4+0.6), namely 0.3529.

Therefore, the number of UEs to be migrated from the cell A to the neighboring cell B is 40*0.2353=9.41≈9, the number of UEs to be migrated from the cell A to the neighboring cell C is 40*0.4118=16.25≈16.5≈17, and the number of UEs to be migrated from the cell A to the neighboring cell E is 40*0.3529=14.11≈14.

At operation 90, the number of UEs to be migrated out is modified.

According to previously obtained,

| | A (frequency 1) | B (frequency 1) | C (frequency 2) | D (frequency 2 | E (frequency 2) |
|---|---|---|---|---|---|
| Frequency 1 | / | / | 10 | 12 | 16 |
| Frequency 2 | 20 | 15 | / | / | / |

Because the frequency of the cell A is the frequency 1, the frequency of the neighboring cell B is the frequency 1, the frequency of the neighboring cell C is the frequency 2, and the frequency of the cell E is the frequency 2, there are only 20 UEs that can be migrated to the frequency 2 in the cell A.

Because the cell C and the cell E have different frequencies compared with the cell A, and there are 20 UEs supporting the inter-frequency 2 in the cell A, only 20 UEs can be migrated out.

Therefore, it is modified that the number of UEs to be migrated to the cell C is 20*(17/(17+14))=10.97≈11, and the number of UEs to be migrated to the cell E is 20*(14/(17+14))≈9. The number of UEs to be migrated to the cell B is 9.

Therefore, the CCNode decides that the actual number of UEs balanced to the neighboring cell B of the cell A is 9, the number of UEs balanced to the neighboring cell C of the cell A is 11, and the number of UEs balanced to the neighboring cell E of the cell A is 9.

The CCNode sends the message to the eNB1 to inform that 9 UEs are to be switched from A to B, and 11 UEs are to be switched from A to C. In addition, the CCNode sends the message to the eNB2 to inform that 9 UEs are to be switched from A to E.

The CCNode may also modify the success rate later. The process is as follows: the CCNode records the number of UEs to be migrated (generally switched), which is sent to multiple cells of the eNB1 and the eNB2. The CCNode obtains the number of UEs successfully migrated (generally switched) in the multiple cells of the eNB1 and the eNB2. The CCNode calculates the hit rate of migration to the specific target cell, that is, the hit rate of migration to the specific target cell is equal to the number of UEs with successful load balancing/the number of UEs for load balancing which is sent to the specific cell of the eNB by the CCNode.

Assuming that some reasons (such as user influx) make A again be the cell to be balanced, while B, C, and E are the neighboring cells with low load, then the process of determining the number of UEs to be migrated to multiple available neighboring cells of the cell A will be modified as follows.

The neighboring cells, with low load, of A are B, C and E, and the residual capacities are respectively 0.4, 0.7 and 0.6.

Assuming that the hit rate is 70% after a first balancing command from A to C is issued, and the hit rate of A to B and A to E is set to 100%, then modification is made according to a balancing hit rate, that is, the residual capacity of C is: 0.7*0.7=0.49, the residual capacity of B is still 0.4, and the residual capacity of E is still 0.6.

The number of UEs to be migrated is calculated based on the modified residual capacity. For example, the ratio of the residual capacity of C to the total residual capacity is equal to 0.49/(0.49+0.4+0.6), namely 0.323, the ratio of the residual capacity of B to the total residual capacity is equal to 0.4/(0.49+0.4+0.6), namely 0.268, and the ratio of the residual capacity of E to the total residual capacity is equal to 0.6/(0.49+0.4+0.6), namely 0.403.

Based on the modified residual capacity, the number of UEs to be migrated is changed. In some embodiments, the number of UEs to be migrated to B is 40*0.268=10.72≈11, the number of UEs to be migrated to C is 40*0.323=12.92≈13, and the number of UEs to be migrated to E is 40*0.403=16.12≈16. Because C and E have different frequencies compared with A, and there are 20 UEs supporting the inter-frequency 2 in the cell A, only 20 UEs can be migrated out. Therefore, the above result may be modified as follows: the number of UEs to be migrated to C is 20*(13/(13+16))=8.97≈9, and the number of UEs to be migrated to E is 20*(16/(13+16))≈11.03. The number of UEs to be migrated to the cell B is 11.

The number of UEs to be migrated from the cell A to the neighboring cell B is 11, the number of UEs to be migrated from the cell A to the neighboring cell C is 9, and the number of UEs to be migrated from the cell A to the neighboring cell E is 11.

In some embodiments, the above is just an exemplary calculation mode, and is not intended to form a limit.

Fig. 9 is a structural block diagram of a CCNode according to some embodiments of the present application. The CCNode is connected to multiple base stations. As shown in Fig. 9, the CCNode 900 according to the embodiments of the present application includes: a processing module 910 and a sending module 920.

The processing module 910 is configured to determine a cell to be balanced, and determine the number of UEs to be migrated from the cell to be balanced to at least one available neighboring cell of the cell to be balanced.

The sending module 920 is configured to send a load balancing instruction to a base station to which the cell to be balanced belongs, wherein the load balancing instruction carries the number of UEs to be migrated from the cell to be balanced to the at least one available neighboring cell.

In the embodiments of the present application, the cell to be balanced and the number of UEs to be migrated from the cell to be balanced to the at least one available neighboring cell of the cell to be balanced are determined, and after the cell to be balanced and the number of UEs to be migrated are obtained, the load balancing instruction may be directly sent to the cell to be balanced. In this way, by carrying out the overall planning of loads through the CCNode, the relative balance of the loads of multiple cells may be ensured, and a good effect of load balancing may be achieved.

In some exemplary implementations of the embodiments of the present application, the processing module 910 is configured to obtain cell information sent by the multiple base stations, obtain the loads of multiple cells belonging to the multiple base stations, and determine the cell to be balanced based on the loads of the multiple cells and the cell information.

In some exemplary implementations of the embodiments of the present application, when the cell to be balanced is determined based on the loads of multiple cells and the cell information, the processing module 910 is configured to:
determine, based on the loads of the multiple cells, at least one target cell, whose load is not less than a threshold value, from the multiple cells belonging to the multiple base stations;
determine at least one neighboring cell of the at least one target cell based on the cell information;
select a target cell, whose neighboring cell has a load less than the threshold value, from the at least one target cell as the cell to be balanced.

In some exemplary implementations of the embodiments of the present application, the processing module 910 is further configured to:
determine, based on a load of the cell to be balanced, a total number of UEs to be migrated out of the cell to be balanced.

The number of UEs to be migrated from the cell to be balanced to the at least one available neighboring cell of the cell to be balanced is determined in a following manner. Based on the total number of the UEs to be migrated out of the cell to be balanced, the number of UEs to be migrated from the cell to be balanced to each available neighboring cell of the cell to be balanced is determined.

In some exemplary implementations of the embodiments of the present application, the processing module 910 is configured to determine a total number of UEs to be migrated out of the cell to be balanced based on the load of the cell to be balanced and the preset corresponding relationship between a load of a cell and the number of UEs to be migrated out.

In some exemplary implementations of the embodiments of the present application, the processing module 910 is further configured to obtain a degree of overlapping between each target cell and each neighboring cell of the target cell, and select the target cell, whose neighboring cell satisfies the following conditions, from the at least one target cell as the cell to be balanced: the load of the neighboring cell is less than a threshold value, and the degree of overlapping between the neighboring cell and the target cell is greater than a first preset threshold.

In some exemplary implementations of the embodiments of the present application, the processing module 910 is further configured to obtain the loads of multiple neighboring cells of the cell to be balanced, and select at least one neighboring cell, whose load is less than a set threshold value, from the multiple neighboring cells of the cell to be balanced as the at least one available neighboring cell of the cell to be balanced.

In some exemplary implementations of the embodiments of the present application, the processing module 910 is further configured to obtain a degree of overlapping between the cell to be balanced and multiple neighboring cells of the cell to be balanced, and select the at least one neighboring cell, whose load is less than the set threshold value and the degree of overlapping between which and the cell to be balanced is greater than the second preset threshold, from the multiple neighboring cells of the cell to be balanced as the at least one available neighboring cell of the cell to be balanced.

In some exemplary implementations of the embodiments of the present application, the processing module 910 is further configured to determine a residual bearing capacity of the at least one available neighboring cell based on the load of the at least one available neighboring cell of the cell to be balanced, and for any available neighboring cell of the cell to be balanced, determine the number of UEs planned to be migrated to the at least one available neighboring cell based on the total number of the UEs to be migrated out of the cell to be balanced and a ratio of the residual bearing capacity of the available neighboring cell to a total residual bearing capacity of the at least one available neighboring cells of the cell to be balanced.

In some exemplary implementations of the embodiments of the present application, the processing module 910 is further configured to determine whether there is an inter-frequency neighboring cell in the at least one available neighbor cell of the cell to be balanced, and in a case where there is an inter-frequency neighboring cell in the at least one available neighbor cell of the cell to be balanced, perform the following operations: the number of UEs supporting inter-frequency frequency points in the cell to be balanced is obtained; the number of UEs planned to be migrated to the inter-frequency neighboring cell is obtained; and a smaller value of the number of UEs supporting the inter-frequency frequency points in the cell to be balanced and the number of UEs planned to be migrated to the inter-frequency neighboring cell is taken as the number of UEs to be migrated from the cell to be balanced to the inter-frequency neighboring cell.

In some exemplary implementations of the embodiments of the present application, the processing module 910 is further configured to obtain a success rate of migration to the specific available neighboring cell of the cell to be balanced, and in a case where there is a need to migrate to the specific available neighboring cell again, determine the number of UEs planned to be migrated to the specific available neighboring cell based on the success rate.

In some exemplary implementations of the embodiments of the present application, when the number of UEs planned to be migrated to the specific available neighboring cell is determined based on the success rate, the processing module 910 is configured to obtain modified bearing capacity of the specific available neighboring cell, wherein the modified bearing capacity is a product of a residual bearing capacity of the specific available neighboring cell and the success rate, and determine the number of UEs planned to be migrated to the specific available neighboring cell based on the total number of the UEs to be migrated out of the cell to be balanced and a ratio of the modified bearing capacity of the specific available neighboring cell to a total modified bearing capacity. The total modified bearing capacity is a sum of the modified bearing capacity of the specific available neighboring cell and residual bearing capacity of all the available neighboring cells, except the specific available neighboring cell, of the cell to be balanced.

Fig. 10 is a structural block diagram of a base station according to some embodiments of the present application. A CCNode is connected to multiple base stations. As shown in Fig. 10, the base station 1000 according to the embodiments of the present application includes: a receiving module 1010 and a processing module 1020.

The receiving module 1010 is configured to receive a load balancing instruction sent by the CCNode, wherein the load balancing instruction carries the number of UEs to be migrated from a cell to be balanced of the base station to at least one available neighboring cell of the cell to be balanced.

The processing module 1020 is configured to migrate the UEs from the cell to be balanced to the at least one available neighboring cell of the cell to be balanced according to the number of UEs to be carried in the load balancing instruction.

In the embodiments of the present application, the cell to be balanced and the number of UEs to be migrated from the cell to be balanced to the at least one available neighboring cell of the cell to be balanced are determined, and after the cell to be balanced and the number of UEs to be migrated are obtained, the load balancing instruction may be directly sent to the cell to be balanced. In this way, by carrying out the overall planning of loads through the CCNode, the relative balance of the loads of multiple cells may be ensured, and a good effect of load balancing may be achieved.

In some exemplary implementations of the embodiments of the present application, the base station 1000 further includes a sending module, configured to send cell information to the CCNode.

In some exemplary implementations of the embodiments of the present application, the base station 1000 further includes a sending module, configured to send an execution result of migration of the UEs to the CCNode.

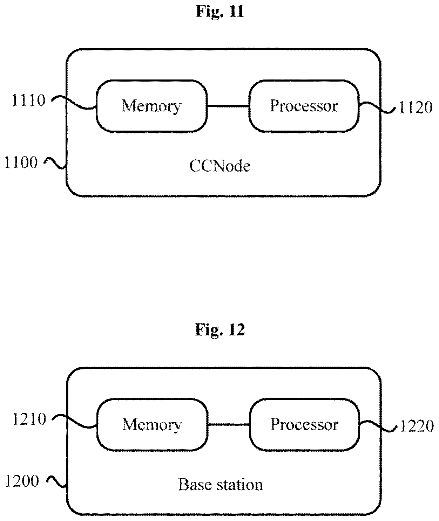

Fig. 11 is a schematic diagram of another CCNode according to some embodiments of the present application. As shown in Fig. 11, the CCNode 1100 according to the embodiments of the present application may include a memory 1110 and a processor 1120. The memory 1110 may store a computer program. When executed by the processor 1120, the computer program may implement any method for realizing load balancing described above based on the CCNode. For example, when executed by the processor 1120, the computer program may perform the following operations: a cell to be balanced is determined; the number of UEs to be migrated from the cell to be balanced to at least one available neighboring cell of the cell to be balanced is determined; and a load balancing instruction is sent to a base station to which the cell to be balanced belongs, wherein the load balancing instruction carries the number of UEs to be migrated from the cell to be balanced to the at least one available neighboring cell.

In the embodiments of the present application, the CCNode determines the cell to be balanced and the number of UEs to be migrated from the cell to be balanced to the at least one available neighboring cell of the cell to be balanced, and after obtaining the cell to be balanced and the number of UEs to be migrated, may directly send the load balancing instruction to the cell to be balanced. In this way, by carrying out the overall planning of loads through the CCNode, the relative balance of the loads of multiple cells may be ensured, and a good effect of load balancing may be achieved.

Fig. 12 is a schematic diagram of another base station according to some embodiments of the present application. As shown in Fig. 12, the base station 1200 according to the embodiments of the present application may include a memory 1210 and a processor 1220. The memory 1210 may store a computer program. When executed by the processor 1220, the computer program may implement any method described above based on the base station. For example, when executed by the processor 1220, the computer program may perform the following operations: a load balancing instruction sent by the CCNode is received, wherein the load balancing instruction carries the number of UEs to be migrated from a cell to be balanced of the base station to at least one available neighboring cell of the cell to be balanced; and the UEs are migrated from the cell to be balanced to the at least one available neighboring cell of the cell to be balanced according to the number of UEs carried in the load balancing instruction.

In the embodiments of the present application, the CCNode determines the cell to be balanced and the number of UEs to be migrated from the cell to be balanced to the at least one available neighboring cell of the cell to be balanced, and after obtaining the cell to be balanced and the number of UEs to be migrated, may directly send the load balancing instruction to the cell to be balanced. In this way, by carrying out the overall planning of loads through the CCNode, the relative balance of the loads of multiple cells may be ensured, and a good effect of load balancing may be achieved.

In addition, the embodiments of the present application also provide a computer-readable storage medium, which stores a computer program. The computer program is configured to implement any above method at runtime.

The computer-readable storage medium according to the embodiments of the present application determines the cell to be balanced and the number of UEs to be migrated from the cell to be balanced to the at least one available neighboring cell of the cell to be balanced, and after obtaining the cell to be balanced and the number of UEs to be migrated, may directly send the load balancing instruction to the cell to be balanced. In this way, by carrying out the overall planning of loads through the CCNode, the relative balance of the loads of multiple cells may be ensured, and a good effect of load balancing may be achieved.

The embodiments of the present application may be provided as methods, devices, or computer program products. Therefore, the present application may adopt forms of complete hardware embodiments, complete software embodiments or embodiments integrating software and hardware. Moreover, the present application may adopt the form of a computer program product implemented on one or more computer available storage media (including a disk memory, a Compact Disc Read Only Memory (CD-ROM), an optical memory, etc.) containing computer available program codes.

The present application is described with reference to flowcharts and/or block diagrams of the method, the device (system) and the computer program product according to the embodiments of the present application. It should be understood that each flow and/or block in the flowchart and/or block diagram, and the combination of the flow and/or block in the flowchart and/or block diagram can be implemented by the computer program instructions. These computer program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the specified functions in one or more flows of the flowchart and/or one or more blocks of the block diagram.

These computer program instructions may also be stored in the computer-readable memory which can guide the computer or other programmable data processing devices to work in a particular way, so that the instructions stored in the computer-readable memory generate a product including an instruction device. The instruction device implements the specified functions in one or more flows of the flowchart and/or one or more blocks of the block diagram.

These computer program instructions may also be loaded on the computer or other programmable data processing devices, so that a series of operations are performed on the computer or other programmable data processing devices to generate the processing implemented by the computer, and the instructions executed on the computer or other programmable data processing devices provide the operations for implementing the specified functions in one or more flows of the flowchart and/or one or more blocks of the block diagram.

In a typical configuration, a computing device includes one or more than one Central Processing Unit (CPU), input/output interface, network interface, and memory.

The memory may include a volatile memory, a Random Access Memory (RAM) and/or a nonvolatile memory, and other forms in computer readable media, for example, a Read Only Memory (ROM) or a flash RAM. The memory is an example of the computer readable media.

The computer readable media include permanent and non-permanent, movable and non-movable media that can realize information storage by a variety of ways or technologies. The information may be computer-readable instructions, data structures, modules of a program, or other data.

## Claims

1. A method for realizing load balancing, which is performed by a Centralized Control Node, CCNode, connected to multiple base stations, the method comprising:
determining (510) a cell to be balanced;
determining (520) the number of pieces of User Equipment, UEs, to be migrated from the cell to be balanced to at least one available neighboring cell of the cell to be balanced, and in a case where there is an inter-frequency neighboring cell in the at least one available neighbor cell of the cell to be balanced, adjusting, according to the number of all UEs, which support inter-frequency frequency points, reported by the cell to be balanced, the number of pieces of UEs to be migrated from the cell to be balanced to the inter-frequency neighboring cell; and
sending (530) a load balancing instruction to a base station to which the cell to be balanced belongs, wherein the load balancing instruction carries the number of UEs to be migrated from the cell to be balanced to the at least one available neighboring cell.

2. The method according to claim 1, wherein determining (510) the cell to be balanced comprises:
obtaining cell information sent by the multiple base stations;
obtaining the loads of multiple cells belonging to the multiple base stations; and
determining the cell to be balanced based on the loads of the multiple cells and the cell information.

3. The method according to claim 2, wherein determining the cell to be balanced based on the loads of the multiple cells and the cell information comprises:
based on the loads of the multiple cells, determining at least one target cell, whose load is not less than a threshold value, from the multiple cells belonging to the multiple base stations;
determining at least one neighboring cell of the at least one target cell based on the cell information; and
selecting a target cell, whose neighboring cell has a load less than the threshold value, from the at least one target cell as the cell to be balanced.

4. The method according to claim 2 or claim 3, wherein after determining (510) the cell to be balanced, the method further comprises:
based on a load of the cell to be balanced, determining a total number of UEs to be migrated out of the cell to be balanced, wherein preferably, based on the load of the cell to be balanced, determining the total number of the UEs to be migrated out of the cell to be balanced comprises: determining the total number of the UEs to be migrated out of the cell to be balanced based on the load of the cell to be balanced and a preset corresponding relationship between a load of a cell and the number of UEs to be migrated out; and
determining (620) the number of UEs to be migrated from the cell to be balanced to the at least one available neighboring cell of the cell to be balanced comprises: based on the total number of the UEs to be migrated out of the cell to be balanced, determining the number of UEs to be migrated from the cell to be balanced to each available neighboring cell of the cell to be balanced.

5. The method according to claim 3, wherein after determining the at least one neighboring cell of the at least one target cell, the method further comprises:
obtaining a degree of overlapping between each target cell and each neighboring cell of the target cell; and
selecting the target cell, whose neighboring cell has the load less than the threshold value, from the at least one target cell as the cell to be balanced comprises: selecting the target cell, whose neighboring cell satisfies the following conditions, from the at least one target cell as the cell to be balanced: the load of the neighboring cell is less than the threshold value, and the degree of overlapping between the neighboring cell and the target cell is greater than a first preset threshold.

6. The method according to claim 1, wherein after determining (510) the cell to be balanced, the method further comprises:
obtaining the loads of multiple neighboring cells of the cell to be balanced; and
selecting at least one neighboring cell, whose load is less than a set threshold value, from multiple neighboring cells of the cell to be balanced as the at least one available neighboring cell of the cell to be balanced.

7. The method according to claim 6, wherein after determining (510) the cell to be balanced, the method further comprises:
obtaining a degree of overlapping between the cell to be balanced and the multiple neighboring cells of the cell to be balanced;
selecting the at least one neighboring cell, whose load is less than the set threshold value, from multiple neighboring cells of the cell to be balanced as the at least one available neighboring cell of the cell to be balanced comprises: selecting the at least one neighboring cell, whose load is less than the set threshold value and the degree of overlapping between which and the cell to be balanced is greater than a second preset threshold, from the multiple neighboring cells of the cell to be balanced as the at least one available neighboring cell of the cell to be balanced.

8. The method according to claim 4, wherein after determining (510) the cell to be balanced, the method further comprises:
determining residual bearing capacity of the at least one available neighboring cell based on the load of the at least one available neighboring cell of the cell to be balanced;
based on the total number of the UEs to be migrated out of the cell to be balanced, determining the number of UEs to be migrated from the cell to be balanced to each available neighboring cell of the cell to be balanced comprises:
for any available neighboring cell of the cell to be balanced, determining the number of UEs planned to be migrated to the at least one available neighboring cell based on the total number of the UEs to be migrated out of the cell to be balanced and a ratio of the residual bearing capacity of the available neighboring cell to a total residual bearing capacity of the at least one available neighboring cells of the cell to be balanced.

9. The method according to claim 8, wherein after determining (510) the cell to be balanced, the method further comprises:
determining whether there is an inter-frequency neighboring cell in the at least one available neighbor cell of the cell to be balanced;
in a case where there is the inter-frequency neighboring cell in the at least one available neighbor cell of the cell to be balanced, performing the following operations:
obtaining the number of UEs supporting inter-frequency frequency points in the cell to be balanced;
obtaining the number of UEs planned to be migrated to the inter-frequency neighboring cell; and
taking a smaller value of the number of UEs supporting the inter-frequency frequency points in the cell to be balanced and the number of UEs planned to be migrated to the inter-frequency neighboring cell as the number of UEs to be migrated from the cell to be balanced to the inter-frequency neighboring cell.

10. The method according to claim 1, wherein after sending (530) the load balancing instruction to the base station to which the cell to be balanced belongs, the method further comprises:
obtaining a success rate of migration to a specific available neighboring cell of the cell to be balanced; and
in a case where there is a need to migrate to the specific available neighboring cell again, determining the number of UEs planned to be migrated to the specific available neighboring cell based on the success rate.

11. The method according to claim 10, wherein determining the number of UEs planned to be migrated to the specific available neighboring cell based on the success rate comprises:
obtaining modified bearing capacity of the specific available neighboring cell, wherein the modified bearing capacity is a product of a residual bearing capacity of the specific available neighboring cell and the success rate;
determining the number of UEs planned to be migrated to the specific available neighboring cell based on a total number of UEs to be migrated out of the cell to be balanced and a ratio of the modified bearing capacity of the specific available neighboring cell to a total modified bearing capacity;
wherein the total modified bearing capacity is a sum of the modified bearing capacity of the specific available neighboring cell and residual bearing capacity of all the available neighboring cells, except the specific available neighboring cell, of the cell to be balanced.

12. A method for realizing load balancing, which is performed by a base station connected to a Centralized Control Node, CCNode, the method comprising:
receiving (610) a load balancing instruction sent by the CCNode, wherein the load balancing instruction carries the number of pieces of User Equipment, UEs, to be migrated from a cell to be balanced of the base station to at least one available neighboring cell of the cell to be balanced, and in a case where there is an inter-frequency neighboring cell in the at least one available neighbor cell of the cell to be balanced, the number of pieces of UEs to be migrated from the cell to be balanced to the inter-frequency neighboring cell and carried in the load balancing instruction is a value adjusted according to the number of all UEs, which support inter-frequency frequency points, reported by the cell to be balanced; and
migrating (620) the UEs from the cell to be balanced to the at least one available neighboring cell of the cell to be balanced according to the number of UEs carried in the load balancing instruction.

13. The method according to claim 12, wherein before receiving (610) the load balancing instruction sent by the CCNode, the method further comprises:
sending cell information to the CCNode;
or,
after migrating (620) the UEs from the cell to be balanced to the at least one available neighboring cell of the cell to be balanced, the method further comprises:
sending an execution result of migration of the UEs to the CCNode.

14. A Centralized Control Node, CCNode, (900) connected to multiple base stations, the CCNode comprising:
a processing module (910), configured to determine a cell to be balanced, determine the number of pieces of User Equipment, UEs, to be migrated from the cell to be balanced to at least one available neighboring cell of the cell to be balanced, and in a case where there is an inter-frequency neighboring cell in the at least one available neighbor cell of the cell to be balanced, adjust, according to the number of all UEs, which support inter-frequency frequency points, reported by the cell to be balanced, the number of pieces of UEs to be migrated from the cell to be balanced to the inter-frequency neighboring cell; and
a sending module (920), configured to send a load balancing instruction to a base station to which the cell to be balanced belongs, wherein the load balancing instruction carries the number of UEs to be migrated from the cell to be balanced to the at least one available neighboring cell.

15. A base station (1000) connected to a Centralized Control Node, CCNode, the base station comprising:
a receiving module (1010), configured to receive a load balancing instruction sent by the CCNode, wherein the load balancing instruction carries the number of pieces of User Equipment, UEs, to be migrated from a cell to be balanced of the base station to at least one available neighboring cell of the cell to be balanced, and in a case where there is an inter-frequency neighboring cell in the at least one available neighbor cell of the cell to be balanced, the number of pieces of UEs to be migrated from the cell to be balanced to the inter-frequency neighboring cell and carried in the load balancing instruction is a value adjusted according to the number of all UEs, which support inter-frequency frequency points, reported by the cell to be balanced; and
a processing module (1020), configured to migrate the UEs from the cell to be balanced to the at least one available neighboring cell of the cell to be balanced according to the number of UEs carried in the load balancing instruction.

## Patentansprüche

1. Verfahren zur Realisierung des Lastausgleich, das durch einen zentralisierten Steuerknoten, CCNode, der mit mehreren Basisstationen verbunden ist, durchgeführt wird, wobei das Verfahren umfassend:
Bestimmen (510) einer auszugleichenden Zelle;
Bestimmen (520) der Anzahl der Benutzereinrichtungen (UE), die aus der auszugleichenden Zelle zu mindestens einer verfügbaren Nachbarzelle der auszugleichenden Zelle migrieren sollen, und im Falle, dass eine Wechselfrequenz-Nachbarzelle in der mindestens einer verfügbaren Nachbarzelle der auszugleichenden Zelle vorhanden ist, Anpassen, gemäß der Anzahl aller UE, die Wechselfrequenzpunkte unterstützen und durch die auszugleichende Zelle gemeldet werden, der Anzahl der UE, die aus der auszugleichenden Zelle zu der Wechselfrequenz-Nachbarzelle migrieren sollen; und
Senden (530) einer Lastausgleichsanweisung an eine Basisstation, zu der die auszugleichende Zelle gehört, wobei die Lastausgleichsanweisung die Anzahl der UE trägt, die aus der auszugleichenden Zelle zu mindestens einer verfügbaren Nachbarzelle migrieren sollen

2. Verfahren nach Anspruch 1, wobei das Bestimmen (510) der auszugleichenden Zelle umfasst:
Erhalten Zellinformationen, die durch die mehreren Basisstationen gesendet werden;
Erhalten der Lasten mehrerer Zellen, die zu den mehreren Basisstationen gehören; und
Bestimmen der auszugleichenden Zelle basierend auf den Lasten der mehreren Zellen und den Zellinformationen.

3. Verfahren nach Anspruch 2, wobei das Bestimmen der auszugleichenden Zelle basierend auf den Lasten der mehreren Zellen und den Zellinformationen umfasst:
basierend auf den Lasten der mehreren Zellen, Bestimmen mindestens einer Zielzelle, deren Last nicht unter einem Schwellenwert liegt, aus den mehreren Zellen, die zu den mehreren Basisstationen gehören;
Bestimmen mindestens einer Nachbarzelle der mindestens einen Zielzelle basierend auf den Zellinformationen; und
Auswählen einer Zielzelle, deren Nachbarzelle eine Last aufweist, die unter dem Schwellenwert liegt, aus der mindestens einen Zielzelle als die auszugleichende Zelle.

4. Verfahren nach Anspruch 2 oder 3, wobei das Verfahren, nach dem Bestimmen (510) der auszugleichenden Zelle, ferner umfasst:
basierend auf einer Last der auszugleichenden Zelle, Bestimmen einer Gesamtzahl der UE, die aus der auszugleichenden Zelle migrieren sollen, wobei vorzugsweise, basierend auf der Last der auszugleichenden Zelle, Bestimmen der Gesamtzahl der UE, die aus der auszugleichenden Zelle migrieren sollen, umfasst: Bestimmen der Gesamtanzahl der UE, die aus der auszugleichenden Zelle migrieren sollen, basierend auf der Last der auszugleichenden Zelle und einer entsprechenden voreingestellten Beziehung zwischen der Last einer Zelle und der Anzahl der zu migrierenden UE; und
Bestimmen (620) der Anzahl der UE, die aus der auszugleichenden Zelle zu mindestens einer verfügbaren Nachbarzelle der auszugleichenden Zelle migrieren sollen, umfasst: basierend auf der Gesamtzahl der UE, die aus der auszugleichenden Zelle migrieren sollen, Bestimmen der Anzahl der UE, die von der auszugleichenden Zelle zu jeder verfügbaren Nachbarzelle der auszugleichenden Zelle migrieren sollen.

5. Verfahren nach Anspruch 3, wobei das Verfahren, nach dem Bestimmen von mindestens einer Nachbarzelle der mindestens einen Zielzelle, ferner umfasst:
Erhalten eines Überlappungsniveau zwischen jeder Zielzelle und jeder Nachbarzelle der Zielzelle; und
Auswählen der Zielzelle, deren Nachbarzelle eine Last aufweist, die unter dem Schwellenwert liegt, aus der mindestens einen Zielzelle als die auszugleichende Zelle umfasst: Auswählen der Zielzelle, deren Nachbarzelle die folgenden Bedingungen erfüllt, aus der mindestens einen Zielzelle als die auszugleichende Zelle: die Last der Nachbarzelle unter einem Schwellenwert liegt, und das Überlappungsniveau zwischen der Nachbarzelle und der Zielzelle größer als ein erster voreingestellter Schwellenwert ist.

6. Verfahren nach Anspruch 1, wobei das Verfahren, nach dem Bestimmen (510) der auszugleichenden Zelle, ferner umfasst:
Erhalten der Lasten mehrerer Nachbarzellen der auszugleichenden Zelle; und
Auswählen mindestens einer Nachbarzelle, deren Last unter einem festgelegten Schwellenwert liegt, aus mehreren Nachbarzellen der auszugleichenden Zelle als mindestens eine verfügbare Nachbarzelle der auszugleichenden Zelle.

7. Verfahren nach Anspruch 6, wobei das Verfahren, nach dem Bestimmen (510) der auszugleichenden Zelle, ferner umfasst:
Erhalten eines Überlappungsniveau zwischen der auszugleichenden Zelle und den mehreren Nachbarzellen der auszugleichenden Zelle;
Auswählen mindestens einer Nachbarzelle, deren Last unter dem festgelegten Schwellenwert liegt, aus mehreren Nachbarzellen der auszugleichenden Zelle als mindestens eine verfügbare Nachbarzelle der auszugleichenden Zelle umfasst: Auswählen mindestens einer Nachbarzelle, deren Last unter dem festgelegten Schwellenwert liegt und das Überlappungsniveau zwischen der und der auszugleichenden Zelle größer als ein zweiter voreingestellter Schwellenwert ist, aus den mehreren Nachbarzellen der auszugleichenden Zelle als mindestens eine verfügbare Nachbarzelle der auszugleichenden Zelle.

8. Verfahren nach Anspruch 4, wobei das Verfahren, nach dem Bestimmen (510) der auszugleichenden Zelle, ferner umfasst:
Bestimmen der Restträgerfähigkeit der mindestens einer verfügbaren Nachbarzelle basierend auf der Last der mindestens einer verfügbaren Nachbarzelle der auszugleichenden Zelle;
Basierend auf der Gesamtzahl der UE, die aus der auszugleichenden Zelle migrieren sollen, Bestimmen der Anzahl der UE, die von der auszugleichenden Zelle zu jeder verfügbaren Nachbarzelle der auszugleichenden Zelle migrieren sollen, umfasst:
für jede verfügbare Nachbarzelle der auszugleichenden Zelle, Bestimmen der Anzahl der UE, die zu mindestens einer verfügbaren Nachbarzelle migrieren sollen, basierend auf der Gesamtzahl der UE, die aus der auszugleichenden Zelle migrieren sollen, und eines Verhältnisses zwischen der Restträgerfähigkeit der verfügbaren Nachbarzelle und einer Gesamtrestträgerfähigkeit der mindestens einer verfügbaren Nachbarzelle der auszugleichenden Zelle.

9. Verfahren nach Anspruch 8, wobei das Verfahren, nach dem Bestimmen (510) der auszugleichenden Zelle, ferner umfasst:
Bestimmen, ob eine Wechselfrequenz-Nachbarzelle in der mindestens einer verfügbaren Nachbarzelle der auszugleichenden Zelle vorhanden ist;
Im Falle, dass eine Wechselfrequenz-Nachbarzelle in der mindestens einer verfügbaren Nachbarzelle der auszugleichenden Zelle vorhanden ist, Ausführen der folgenden Vorgänge:
Erhalten der Anzahl der UE, die Wechselfrequenzpunkte in der auszugleichenden Zelle unterstützen;
Empfangen der Anzahl der UE, die zur Wechselfrequenz-Nachbarzelle migrieren sollen; und
Erfassen eine kleinere Anzahl der UE, die Wechselfrequenzpunkte in der auszugleichenden Zelle unterstützen, und die Anzahl der UE, die zur Wechselfrequenz-Nachbarzelle migrieren sollen, als die Anzahl der UE. die von der auszugleichenden Zelle zur Wechselfrequenz-Nachbarzelle migrieren sollen.

10. Verfahren nach Anspruch 1, wobei das Verfahren, nach dem Senden (530) der Lastausgleichsanweisung an die Basisstation, zu der die auszugleichende Zelle gehört, das ferner umfasst:
Erhalten ein Erfolgsniveau der Migration zu einer spezifischen verfügbaren Nachbarzelle der auszugleichenden Zelle; und
Im Falle, dass es notwendig ist, zu der spezifischen verfügbaren Nachbarzelle wieder zu migrieren, Bestimmen der Anzahl der UE, die zu der spezifischen verfügbaren Nachbarzelle basierend auf dem Erfolgsniveau migrieren sollen.

11. Verfahren nach Anspruch 10, wobei das Bestimmen der Anzahl der UE, die zu der spezifischen verfügbaren Nachbarzelle basierend auf dem Erfolgsniveau migrieren sollen, umfasst:
Erhalten der modifizierten Trägerfähigkeit der spezifischen verfügbaren Nachbarzelle, wobei die modifizierte Trägerfähigkeit ein Produkt einer Restträgerfähigkeit der spezifischen verfügbaren Nachbarzelle und des Erfolgsniveaus ist;
Bestimmen der Anzahl der UE, die zu der spezifischen verfügbaren Nachbarzelle migrieren sollen, basierend auf einer Gesamtzahl der UE, die aus der auszugleichenden Zelle migrieren sollen, und eines Verhältnisses zwischen der modifizierten Trägerfähigkeit der spezifischen verfügbaren Nachbarzelle und einer modifizierten Gesamtträgerfähigkeit;
wobei die modifizierte Gesamtträgerfähigkeit eine Summe der modifizierten Trägerfähigkeit der spezifischen verfügbaren Nachbarzelle und der Restträgerfähigkeit aller verfügbaren Nachbarzellen, außer der spezifischen verfügbaren Nachbarzelle, der auszugleichenden Zelle ist.

12. Verfahren zur Realisierung des Lastausgleichs, das durch eine Basisstation, die mit einem zentralisierten Steuerknoten, CCNode, verbunden ist, durchgeführt wird, wobei das Verfahren umfassend:
Empfangen (610) einer Lastausgleichsanweisung, die vom CCNode gesendet wird, wobei die Lastausgleichsanweisung die Anzahl der Benutzereinrichtungen (UE) trägt, die aus einer auszugleichenden Zelle der Basisstation zu mindestens einer verfügbaren Nachbarzelle der auszugleichenden Zelle migrieren sollen, und im Falle, dass eine Wechselfrequenz-Nachbarzelle in der mindestens einer verfügbaren Nachbarzelle der auszugleichenden Zelle vorhanden ist, ist die Anzahl der UE, die aus der auszugleichenden Zelle zu der Wechselfrequenz-Nachbarzelle migrieren sollen und in der Lastausgleichsanweisung angegeben ist, ein Wert, der gemäß der Anzahl aller UE, die Wechselfrequenzpunkte unterstützen und durch die auszugleichende Zelle gemeldet werden, angepasst wird; und
Migrieren (620) der UE aus der auszugleichenden Zelle zu mindestens einer verfügbaren Nachbarzelle der auszugleichenden Zelle gemäß der in der Lastausgleichsanweisung angegebenen Anzahl der UE.

13. Verfahren nach Anspruch 12, wobei das Verfahren, vor dem Empfangen (610) der vom CCNode gesendeten Lastausgleichsanweisung ferner umfasst:
Senden Zellinformationen an den CCNode; oder,
das Verfahren, nach dem Migrieren (620) der UE aus der auszugleichenden Zelle zu mindestens einer verfügbaren Nachbarzelle der auszugleichenden Zelle, ferner umfasst:
Senden eines Ausführungsergebnisses der Migration der UE an den CCNode.

14. Zentralisierter Steuerknoten, CCNode, (900), der mit mehreren Basisstationen verbunden ist, wobei der CCNode umfasst:
ein Verarbeitungsmodul (910), das konfiguriert ist, eine auszugleichende Zelle zu bestimmen, die Anzahl der Benutzereinrichtungen (UE) zu bestimmen, die aus der auszugleichenden Zelle zu mindestens einer verfügbaren Nachbarzelle der auszugleichenden Zelle migrieren sollen, und im Falle, dass eine Wechselfrequenz-Nachbarzelle in der mindestens einer verfügbaren Nachbarzelle der auszugleichenden Zelle vorhanden ist, Anpassen, gemäß der Anzahl aller UE, die Wechselfrequenzpunkte unterstützen und durch die auszugleichende Zelle gemeldet werden, der Anzahl der UE, die aus der auszugleichenden Zelle zu der Wechselfrequenz-Nachbarzelle migrieren sollen; und
ein Sendemodul (920), das konfiguriert ist, eine Lastausgleichsanweisung an eine Basisstation, zu der die auszugleichende Zelle gehört, zu senden, wobei die Lastausgleichsanweisung die Anzahl der UE trägt, die aus der auszugleichenden Zelle zu mindestens einer verfügbaren Nachbarzelle migrieren sollen.

15. Basisstation (1000), die mit einem zentralisierten Steuerknoten, CCNode verbunden ist, wobei die Basisstation umfassend:
ein Empfangsmodul (1010), das konfiguriert ist, eine Lastausgleichsanweisung zu empfangen, die durch den CCNode gesendet wird, wobei die Lastausgleichsanweisung die Anzahl der Benutzereinrichtungen (UEs) trägt, die aus einer auszugleichenden Zelle der Basisstation zu mindestens einer verfügbaren Nachbarzelle der auszugleichenden Zelle migrieren sollen, und im Falle, dass eine Wechselfrequenz-Nachbarzelle in der mindestens einer verfügbaren Nachbarzelle der auszugleichenden Zelle vorhanden ist, ist die Anzahl der UE, die aus der auszugleichenden Zelle zu der Wechselfrequenz-Nachbarzelle migrieren sollen und die in der Lastausgleichsanweisung angegeben sind, ein Wert, der gemäß der Anzahl aller UEs, die Wechselfrequenzpunkte unterstützen und durch die auszugleichende Zelle gemeldet werden, angepasst wird; und
ein Verarbeitungsmodul (1020), das konfiguriert ist, die UE aus der auszugleichenden Zelle zu mindestens einer verfügbaren Nachbarzelle der auszugleichenden Zelle gemäß der in der Lastausgleichsanweisung angegebenen Anzahl der UE migrieren zu lassen.

## Revendications

1. Une méthode de réalisation de l'équilibrage de la charge, réalisée par un Noeud de Contrôle Centralisé, CCNode, connecté à plusieurs stations de base, la méthode comprenant:
déterminer (510) une cellule à équilibrer;
déterminer (520) le nombre de pièces d'équipements utilisateurs (UE) à migrer de la cellule à équilibrer vers au moins une cellule voisine disponible de la cellule à équilibrer, et dans le cas où il existe une cellule voisine inter-fréquence dans au moins une cellule voisine disponible de la cellule à équilibrer, ajuster, selon le nombre total d'UE, qui supportent les points de fréquence inter-fréquence, rapporté par la cellule à équilibrer, le nombre des pièces d'UE à migrer de la cellule à équilibrer vers la cellule voisine inter-fréquence; et
envoyer (530) une instruction d'équilibrage de charge à une station de base à laquelle appartient la cellule à équilibrer, où l'instruction d'équilibrage de charge porte le nombre d'UE à migrer de la cellule à équilibrer vers au moins une cellule voisine

2. La méthode selon la revendication 1, dans laquelle déterminer (510) la cellule à équilibrer comprend:
obtenir les informations de cellule envoyées par les multiples stations de base;
obtenir les charges de multiples cellules appartenant aux multiples stations de base; et
déterminer la cellule à équilibrer en fonction des charges des multiples cellules et des informations de cellule.

3. La méthode selon la revendication 2, dans laquelle déterminer la cellule à équilibrer en fonction des charges des multiples cellules et des informations de cellule comprend:
en fonction des charges des multiples cellules, déterminer au moins une cellule cible, dont la charge n'est pas inférieure à une valeur seuil, parmi les multiples cellules appartenant aux multiples stations de base;
déterminer au moins une cellule voisine d'au moins une des cellules cibles en fonction des informations de cellule; et
sélectionner une cellule cible, dont la cellule voisine a une charge inférieure à la valeur seuil, d'au moins une des cellules cibles comme la cellule à équilibrer.

4. La méthode selon la revendication 2 ou 3, dans laquelle après avoir déterminé (510) la cellule à équilibrer, la méthode comprend en outre:
en fonction d'une charge de la cellule à équilibrer, déterminer un nombre total d'UE à migrer hors de la cellule à équilibrer, où, de préférence, en fonction de la charge de la cellule à équilibrer, déterminer le nombre total d'UE à migrer hors de la cellule à équilibrer comprend: déterminer le nombre total d'UE à migrer hors de la cellule à équilibrer en fonction de la charge de la cellule à équilibrer et d'une relation préétablie correspondante entre une charge de cellule et le nombre d'UE à migrer hors; et
déterminer (620) le nombre d'UE à migrer de la cellule à équilibrer vers au moins une cellule voisine disponible de la cellule à équilibrer comprend : en fonction du nombre total d'UE à hors de la cellule à équilibrer, déterminer le nombre d'UE à migrer de la cellule à équilibrer vers chaque cellule voisine disponible de la cellule à équilibrer.

5. La méthode selon la revendication 3, dans laquelle après avoir déterminé au moins une cellule voisine d'au moins une cellule cible, la méthode comprend en outre:
obtenir un degré de chevauchement entre chaque cellule cible et chaque cellule voisine de la cellule cible; et
sélectionner la cellule cible, dont la cellule voisine a une charge inférieure à la valeur seuil, d'au moins une cellule cible comme la cellule à équilibrer, comprend : sélectionner la cellule cible, dont la cellule voisine satisfait aux conditions suivantes, d'au moins une cellule cibles comme la cellule à équilibrer : la charge de la cellule voisine est inférieure à la valeur seuil, et le degré de chevauchement entre la cellule voisine et la cellule cible est supérieur à un premier seuil prédéfini.

6. La méthode selon la revendication 1, dans laquelle après avoir déterminé (510) la cellule à équilibrer, la méthode comprend en outre:
obtenir les charges de multiples cellules voisines de la cellule à équilibrer; et
sélectionner au moins une cellule voisine, dont la charge est inférieure à une valeur seuil définie, parmi les multiples cellules voisines de la cellule à équilibrer comme au moins une cellule voisine disponible de la cellule à équilibrer.

7. La méthode selon la revendication 6, dans laquelle après avoir déterminé (510) la cellule à équilibrer, la méthode comprend en outre:
obtenir un degré de chevauchement entre la cellule à équilibrer et les multiples cellules voisines de la cellule à équilibrer;
sélectionner au moins une cellule voisine, dont la charge est inférieure à la valeur seuil définie, parmi les multiples cellules voisines de la cellule à équilibrer comme au moins une cellule voisine disponible de la cellule à équilibrer comprend: sélectionner au moins une cellule voisine, dont la charge est inférieure à la valeur seuil définie et le degré de chevauchement entre laquelle et la cellule à équilibrer est supérieur à un deuxième seuil prédéfini, parmi les multiples cellules voisines de la cellule à équilibrer comme au moins une cellule voisine disponible de la cellule à équilibrer.

8. La méthode selon la revendication 4, où après avoir déterminé (510) la cellule à équilibrer, la méthode comprend en outre:
déterminer la capacité portante résiduelle d'au moins une cellule voisine disponible en fonction de la charge d'au moins une cellules voisine disponible de la cellule à équilibrer;
en fonction du nombre total d'UE à migrer hors de la cellule à équilibrer, déterminer le nombre d'UE à migrer de la cellule à équilibrer à chaque cellule voisine disponible de la cellule à équilibrer comprend:
pour toute cellule voisine disponible de la cellule à équilibrer, déterminer le nombre d'UE prévus à migrer à au moins une cellule voisine disponible en fonction du nombre total d'UE à migrer hors de la cellule à équilibrer et d'un ratio de la capacité portante résiduelle de la cellule voisine disponible à une capacité portante résiduelle totale d'au moins une des cellules voisines disponibles de la cellule à équilibrer.

9. La méthode selon la revendication 8, dans laquelle, après avoir déterminé (510) la cellule à équilibrer, la méthode comprend en outre :
déterminer s'il existe une cellule voisine inter-fréquence dans au moins une cellule voisine disponible de la cellule à équilibrer ;
dans le cas où il existe une cellule voisine inter-fréquence dans au moins une cellule voisine disponible de la cellule à équilibrer, effectuer les opérations suivantes :
obtenir le nombre d'UE supportant les points de fréquence inter-fréquence dans la cellule à équilibrer ;
obtenir le nombre d'UE prévus à migrer vers la cellule voisine inter-fréquence ; et
prendre la valeur la plus petite entre le nombre d'UE supportant les points de fréquence inter-fréquence dans la cellule à équilibrer et le nombre d'UE prévus à migrer vers la cellule voisine inter-fréquence comme le nombre d'UE à migrer de la cellule à équilibrer vers la cellule voisine inter-fréquence.

10. La méthode selon la revendication 1, dans laquelle après avoir envoyé (530) l'instruction d'équilibrage de charge à la station de base à laquelle appartient la cellule à équilibrer, la méthode comprend en outre :
obtenir un taux de réussite de la migration vers une cellule voisine spécifique disponible de la cellule à équilibrer ; et
dans le cas où il est nécessaire de migrer à nouveau vers la cellule voisine spécifique, déterminer le nombre d'UE prévus à migrer vers la cellule voisine spécifique disponible en fonction du taux de réussite.

11. La méthode selon la revendication 10, dans laquelle déterminer le nombre d'UE prévus à migrer vers la cellule voisine spécifique disponible en fonction du taux de réussite comprend:
obtenir une capacité portante modifiée de la cellule voisine spécifique disponible, où la capacité portante modifiée est un produit de la capacité portante résiduelle de la cellule voisine spécifique disponible et du taux de réussite;
déterminer le nombre d'UE prévus à migrer vers la cellule voisine spécifique disponible en fonction d'un nombre total d'UE à migrer hors de la cellule à équilibrer et d'un ratio de la capacité portante modifiée de la cellule voisine spécifique disponible à une capacité portante totale modifiée;
dans laquelle la capacité portante totale modifiée est une somme de la capacité portante modifiée de la cellule voisine spécifique disponible et de la capacité portante résiduelle de toutes les cellules voisines disponibles, excepté la cellule voisine spécifique disponible, de la cellule à équilibrer.

12. Une méthode de réalisation de l'équilibrage de la charge, réalisée par une station de base connectée à un Noeud de Contrôle Centralisé, CCNode, la méthode comprenant:
recevoir (610) une instruction d'équilibrage de charge envoyée par le CCNode, où l'instruction d'équilibrage de charge porte le nombre des pièces d'équipements utilisateurs (UE) à migrer d'une cellule à équilibrer de la station de base vers au moins une cellule voisine disponible de la cellule à équilibrer, et dans le cas où il existe une cellule voisine inter-fréquence dans au moins une cellule voisine disponible de la cellule à équilibrer, le nombre d'UE à migrer de la cellule à équilibrer vers la cellule voisine inter-fréquence et porté dans l'instruction d'équilibrage de charge est une valeur ajustée en fonction du nombre total d'UE, qui supportent les points de fréquence inter-fréquence, rapporté par la cellule à équilibrer; et
migrer (620) les UE de la cellule à équilibrer vers au moins une cellule voisine disponible de la cellule à équilibrer selon le nombre d'UE porté dans l'instruction d'équilibrage de charge.

13. La méthode selon la revendication 12, dans laquelle avant de recevoir (610) l'instruction d'équilibrage de charge envoyée par le CCNode, la méthode comprend en outre:
envoyer les informations de cellule au CCNode;
ou,
après avoir migré (620) les UE de la cellule à équilibrer vers au moins une cellule voisine disponible de la cellule à équilibrer, la méthode comprend en outre:
envoyer un résultat d'exécution de la migration des UE vers le CCNode.

14. Un Noeud de Contrôle Centralisé, CCNode, (900) connecté à plusieurs stations de base, le CCNode comprenant:
un module de traitement (910), configuré pour déterminer une cellule à équilibrer, détermine le nombre des pièces d'équipements utilisateurs (UE) à migrer de la cellule à équilibrer vers au moins une cellule voisine disponible de la cellule à équilibrer, et dans le cas où il existe une cellule voisine inter-fréquence parmi au moins une cellule voisine disponible de la cellule à équilibrer, ajuster, selon le nombre total d'UE, qui supportent les points de fréquence inter-fréquence, rapporté par la cellule à équilibrer, le nombre des pièces d'UE à migrer de la cellule à équilibrer vers la cellule voisine inter-fréquence; et
un module d'envoi (920), configuré pour envoyer une instruction d'équilibrage de charge à une station de base à laquelle appartient la cellule à équilibrer, dans lequel l'instruction d'équilibrage de charge porte le nombre d'UE à migrer hors de la cellule à équilibrer vers au moins une cellule voisine disponible.

15. Une station de base (1000) connectée à un Noeud de Contrôle Centralisé, CCNode, la station de base comprenant :
un module de réception (1010), configuré pour recevoir une instruction d'équilibrage de charge envoyée par le CCNode, dans lequel l'instruction d'équilibrage de charge comporte le nombre des pièces d'équipements utilisateurs (UE) à migrer d'une cellule à équilibrer de la station de base vers au moins une cellule voisine disponible de la cellule à équilibrer, et dans le cas où il existe une cellule voisine inter-fréquence à partir d'au moins une cellule voisine disponible de la cellule à équilibrer, le nombre des pièces d'UE à migrer de la cellule à équilibrer vers la cellule voisine inter-fréquence et porté dans l'instruction d'équilibrage de charge est une valeur ajustée selon le nombre total d'UE, qui supportent les points de fréquence inter-fréquence, rapporté par la cellule à équilibrer; et
un module de traitement (1020), configuré pour migrer les UE de la cellule à équilibrer vers au moins une cellule voisine disponible de la cellule à équilibrer selon le nombre d'UE porté dans l'instruction d'équilibrage de charge.
